# EUROPEAN PATENT APPLICATION

(11) **EP 4 645 729 A2**
(43) Date of publication of application: **05.11.2025**
(21) Application number: 25203513.4
(22) Date of filing: 10.08.2023
(51) Int. Cl.: H04L 1/08

(54) **APPARATUS AND METHOD FOR ESTABLISHING A SIDELINK COMMUNICATION OVER AN UNLICENSED CARRIER**

(30) Priority: 11.08.2022 US 202263397079 P
(62) Divisional of application: 23758054.3
(71) Applicant: Lenovo (Singapore) Pte. Ltd., New Tech Park 556741 (SG)
(72) Inventor: GOLITSCHEK EDLER VON ELBWART, Alexander, 64285 Darmstadt (DE); GANESAN, Karthikeyan, 61476 Kronberg im Taunus (DE); LÖHR, Joachim, 65203 Wiesbaden (DE); BASU MALLICK, Prateek, 63303 Dreieich (DE)
(74) Representative: Openshaw & Co.

(57) **Abstract**

A user equipment (UE), processor and method are provided for sidelink communication. The method includes selecting (602) one of an ordered sequence of values for use as a maximum contention window size for an associated priority class in determining a contention window size to be used in identifying whether a channel in an unlicensed carrier is clear. The UE is authorized to make use of the channel for a sidelink transmission after the UE uses the determined contention window size to identify that the channel in the unlicensed carrier is clear for a number of sensing slots (604). For subsequent sidelink transmission authorization procedure(s), a determination is made as to whether the maximum contention window size is updated for use in identifying whether the channel in the unlicensed carrier is clear (606).

## Description

### FIELD OF THE INVENTION

The present disclosure is directed to the establishment of a sidelink communication over an unlicensed carrier, and more particularly to the management of a contention window size to be used in identifying whether a channel in the unlicensed carrier is clear.

### BACKGROUND OF THE INVENTION

Presently, user equipment, such as wireless communication devices, communicate with other communication devices using wireless signals, such as within a network environment that can include one or more cells within which various communication connections with the network and other devices operating within the network can be supported. Network environments often involve one or more sets of standards, which each define various aspects of any communication connection being made when using the corresponding standard within the network environment. Examples of developing and/or existing standards include new radio access technology (NR), Long Term Evolution (LTE), Universal Mobile Telecommunications Service (UMTS), Global System for Mobile Communication (GSM), and/or Enhanced Data GSM Environment (EDGE).

As part of functioning within many communication networks, such as cellular communication networks, a large part of supporting communications can often involve the use of spectrum resources, that are largely auctioned/licensed for use to a specific service provider through appropriate governing authorities. The amount of licensed spectrum that a service provider has obtained the rights to use often correlates to the overall amount of information throughput that can be more directly supported. As a way of expanding capabilities and information throughput, service providers have been increasingly looking toward unlicensed frequencies, that are available for general use, as a way to support enhanced functionality and communication throughput.

Communications in an unlicensed portion of the spectrum can sometimes involve a form of communication referred to as listen before talk (LBT). In LBT, a radio transmitter will often sense the radio environment for activity from other sources in the radio channel space of interest (listen), before attempting to transmit (talk), after the radio channel space is determined to be relatively clear of other already existing communications. In an effort to more fairly manage the sharing of the unlicensed portion of the spectrum for the purposes of supporting communications for potentially multiple different users, various parameters have been established which help to balance how often a user can make use of an unlicensed carrier, as well as when a particular user makes use of the unlicensed carrier, how long they may transmit before they need to get back in line and wait for the radio channel space to become available, again (i.e. listen). These parameters have traditionally been better defined in an environment, where a user is communicating with the network via an unlicensed carrier, but are relatively more modestly defined in instances where the user is communicating more directly with another user without relaying their data via the network. Communications which use the unlicensed spectrum in a more user to user direct fashion are sometimes referred to as sidelink communications.

Such a form of communication in some instances may better facilitate the establishment of an ad-hoc network, where it may be beneficial to establish a connection with other nearby devices without needing any network involvement. While such a service could be beneficial to users using a handset for communications including instances in which network service may not be available to one or both of the parties involved in a particular communication, other devices including smart devices, robots or other gadgets can use such a feature to communicate with other nearby devices for sharing information, such as sensor information, and/or for enabling the devices to coordinate their activity with the other nearby devices, such as for traffic management and movement on a highway involving multiple vehicles. The use of communications via an unlicensed portion of the spectrum can also be used as a means of increasing data throughput for some activities that can be more data intensive, such as virtual and/or augmented reality type applications.

In order to help ensure that a particular user does not monopolize the use of the shared unlicensed carrier to the detriment of other users that are also similarly interested in using the same unlicensed portion of the spectrum, various parameters have been established that help define how any particular user can make use of the shared unlicensed frequencies. One such parameter is the use of a contention window size, having a defined value which can vary over time. The contention window size establishes a period of time that a user needs to wait before the user can attempt to make use of the channel space. During this wait period, the channel space is available to be used by other users, who are likely managing their own wait times. By managing the various parameters governing the use of the shared space, it is hoped that effective sharing between all of the desired users can be better managed while better optimizing the overall use of the shared resource.

The present inventors have recognized that in some instances it may be desirable to allow the particular contention window size being used by a particular user equipment to be able to vary over time in response to one or more detectable conditions. In at least some instances, this can be used to beneficial effect to help better manage the sharing of the unlicensed portion of the spectrum between multiple potential users, while similarly helping prevent a particular user from using a disproportionate amount of the shared resource.

### SUMMARY

The present application provides a user equipment (UE) for sidelink communication. The UE includes at least one controller coupled with at least one memory and configured to cause the UE to select one of an ordered sequence of values corresponding to a plurality of values for use as a maximum contention window size for an associated priority class for use by the UE in determining a contention window size to be used in identifying whether a channel in an unlicensed carrier is clear by a transmission authorization procedure. The UE is authorized to make use of the channel for a sidelink transmission after the controller of the UE uses the determined contention window size, based on the selected value for the maximum contention window size to identify that the channel in the unlicensed carrier as determined using a transceiver is clear for a number of sensing slots in accordance with the determined contention window size. For subsequent sidelink transmission authorization procedure(s), a determination is made by the controller as to whether the maximum contention window size is updated from which a new current contention window size can be determined for use in identifying using the transceiver whether the channel in the unlicensed carrier to be used for the subsequent sidelink transmissions is clear.

According to another possible embodiment, a processor for wireless communication in a user equipment (UE) for sidelink communication is provided. The processor includes at least one controller coupled with at least one memory and configured to cause the processor to select one of an ordered sequence of values corresponding to a plurality of values for use as a maximum contention window size for an associated priority class for use by the UE in determining a contention window size to be used in identifying whether a channel in an unlicensed carrier is clear by a transmission authorization procedure. The UE is authorized to make use of the channel for a sidelink transmission after the controller of the UE uses the determined contention window size, based on the selected value for the maximum contention window size to identify that the channel in the unlicensed carrier as determined using a transceiver is clear for a number of sensing slots in accordance with the determined contention window size. For subsequent sidelink transmission authorization procedure(s), a determination is made by the controller as to whether the maximum contention window size is updated from which a new current contention window size can be determined for use in identifying using the transceiver whether the channel in the unlicensed carrier to be used for the subsequent sidelink transmissions is clear.

According to a further possible embodiment, a method in a user equipment (UE) for sidelink communication is provided. The method includes selecting one of an ordered sequence of values corresponding to a plurality of values for use as a maximum contention window size for an associated priority class for use by the UE in determining a contention window size to be used in identifying whether a channel in an unlicensed carrier is clear by a transmission authorization procedure. The UE is authorized to make use of the channel for a sidelink transmission after the UE uses the determined contention window size, based on the selected value for the maximum contention window size, to identify that the channel in the unlicensed carrier is clear for a number of sensing slots in accordance with the determined contention window size. For subsequent sidelink transmission authorization procedure(s), a determination is made as to whether the maximum contention window size is updated from which a new current contention window size can be determined for use in identifying whether the channel in the unlicensed carrier to be used for the subsequent sidelink transmissions is clear.

These and other features, and advantages of the present application are evident from the following description of one or more preferred embodiments, with reference to the accompanying drawings.

### BRIEF DESCRIPTION OF THE DRAWINGS

FIG. 1 is a block diagram of an exemplary network environment in which the present invention is adapted to operate;
FIG. 2 is an example of a sidelink slot structure with 14 symbols available;
FIG. 3 is a further example of a sidelink slot structure, also with 14 symbols available;
FIG. 4 is a still further example of a sidelink slot structure, one which has 13 symbols available;
FIG. 5 is an exemplary resource pool structure;
FIG. 6 is a flow diagram in a user equipment for establishing a sidelink communication including one or more sidelink transmissions over an unlicensed carrier; and
FIG. 7 is an examplary block diagram of an apparatus according to a possible embodiment.

### DETAILED DESCRIPTION OF THE PREFERRED EMBODIMENT(S)

While the present disclosure is susceptible of embodiment in various forms, there is shown in the drawings and will hereinafter be described presently preferred embodiments with the understanding that the present disclosure is to be considered an exemplification of the invention and is not intended to limit the invention to the specific embodiments illustrated.

Embodiments provide support for the establishment of a sidelink communication over an unlicensed carrier, including the management of a contention window size to be used in identifying whether a channel in the unlicensed carrier is clear.

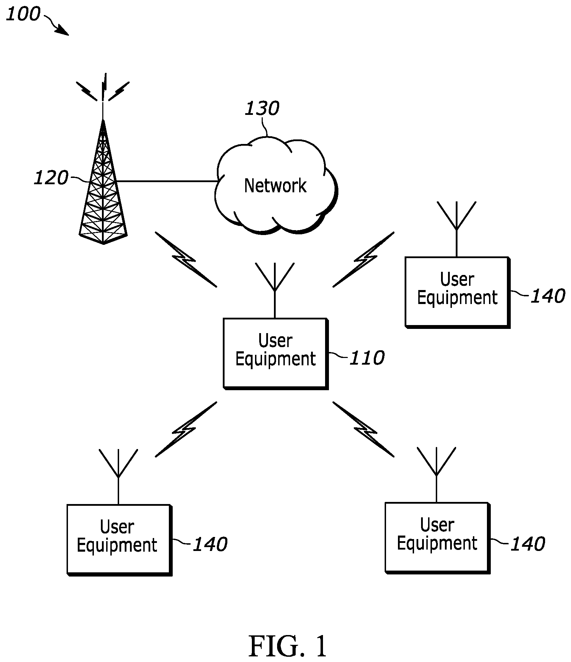

FIG. 1 is an example block diagram of a system 100 according to a possible embodiment. The system 100 can include a wireless communication device 110, such as User Equipment (UE), a base station 120, such as an enhanced NodeB (eNB) or next generation NodeB (gNB), and a network 130.

The wireless communication device 110 can be a wireless terminal, a portable wireless communication device, a smartphone, a cellular telephone, a flip phone, a personal digital assistant, a personal computer, a selective call receiver, a tablet computer, a laptop computer, or any other device that is capable of sending and receiving communication signals on a wireless network.

The network 130 can include any type of network that is capable of sending and receiving wireless communication signals. For example, the network 130 can include a wireless communication network, a cellular telephone network, a Time Division Multiple Access (TDMA)-based network, a Code Division Multiple Access (CDMA)-based network, an Orthogonal Frequency Division Multiple Access (OFDMA)-based network, a Long Term Evolution (LTE) network, a 5th generation (5G) network, a 3rd Generation Partnership Project (3GPP)-based network, a satellite communications network, a high altitude platform network, the Internet, and/or other communications networks.

In addition to and/or alternative to communicating with the network 130, the wireless communication device 110 may sometimes be able to communicate more directly with other wireless communication devices, such as user equipment 140. An example of this type of communication can sometimes be called peer-to-peer, and can sometimes relate to a sidelink type communication. In some instances, this can involve a targeted communication with a single entity, which is sometimes referred to as a unicast. In some instances, this can involve a targeted communication with multiple entities, which is sometimes referred to as a multi-cast. In some instances, this can involve an untargeted communication, which is available to any entity within transmission/reception range, which is sometimes referred to as a broadcast. In the illustrated embodiment, the base station 120 and the other user equipment 140 are potential communication targets of the wireless communication device 110.

Sidelink transmissions may be carried out over an unlicensed carrier, and it can be expected that at least in some regulatory domains access to the unlicensed channel is governed by a clear channel assessment (CCA) procedure based e.g. on listen-before-talk (LBT).

In downlink (DL) and uplink (UL) transmissions on an unlicensed carrier, one channel access type is based on a contention window with random value (Type 1 in technical specification (TS) 37.213), where the random value is determined based on a uniform probability function between 0 and CWₚ. Basically the contention window (CWₚ) value is increased if the transmitter receives a negative acknowledgement (NACK) feedback for the first transport block of an acquired channel occupancy time (COT), and is decreased if the transmitter receives an acknowledgement (ACK) feedback for the first transport block in an acquired COT.

In sidelink however, there is an option to transmit NACK-only as feedback for a packet or transport block. In such a case, a transmitter will not receive a feedback for a successfully received packet by a receiver, but only NACK in the case where a packet was not correctly received by a receiver. Therefore it would be beneficial if new rules could be established for the update (increase and/or decrease) of the upper bound CWₚ in the random number generation.

Similarly, in the case where a groupcast or broadcast is transmitted in sidelink, it would be beneficial if rules could be established as to how to update (increase and/or decrease) the upper bound CWₚ in the random number generation, based on a plurality of feedback received from a plurality of recipients of a transport block.

There is even an option of no HARQ feedback at all for a packet or transport block. In this case, it would also be beneficial if there was a procedure for the update (increase and/or decrease) of the upper bound CWₚ in the random number generation. From 3rd Generation Partnership Project (3GPP) TS 37.213 v17.2.0 (DL contention window adjustment

### 4.1.4 Contention window adjustment procedures

If an eNB/gNB transmits transmissions including physical downlink shared channel (PDSCH) that are associated with channel access priority class *p* on a channel, the eNB/gNB maintains the contention window value *CWₚ* and adjusts *CWₚ* before step 1 of the procedure described in clause 4.1.1 for those transmissions as described in this clause.

### 4.1.4.1 Contention window adjustment procedures for transmissions by eNB

If an eNB transmits transmissions including PDSCH that are associated with channel access priority class *p* on a channel, the eNB maintains the contention window value *CWₚ* and adjusts *CWₚ* before step 1 of the procedure described in clause 4.1.1 for those transmissions using the following steps:
1) for every priority class *p* ∈ {1,2,3,4} set *CWₚ = CW_{min,p}*
2) if at least *Z* = 80% of hybrid automatic repeat request (HARQ)-ACK values corresponding to PDSCH transmission(s) in reference subframe *k* are determined as NACK, increase *CWₚ* for every priority class *p* ∈ {1,2,3,4} to the next higher allowed value and remain in step 2; otherwise, go to step 1.

Reference subframe *k* is the starting subframe of the most recent transmission on the channel made by the eNB, for which at least some HARQ-ACK feedback is expected to be available.

The eNB shall adjust the value of *CWₚ* for every priority class *p* ∈ {1,2,3,4} based on a given reference subframe *k* only once.

For determining *Z*,
- if the eNB transmission(s) for which HARQ-ACK feedback is available start in the second slot of subframe *k*, HARQ-ACK values corresponding to PDSCH transmission(s) in subframe *k* + 1 are also used in addition to the HARQ-ACK values corresponding to PDSCH transmission(s) in subframe *k*.
- if the HARQ-ACK values correspond to PDSCH transmission(s) on an license assisted access (LAA) secondary cell (SCell) that are assigned by (E)PDCCH transmitted on the same LAA SCell,
   - if no HARQ-ACK feedback is detected for a PDSCH transmission by the eNB, or if the eNB detects discontinuous transmission ('DTX'), 'NACK/DTX' or 'any' state, it is counted as NACK.
- if the HARQ-ACK values correspond to PDSCH transmission(s) on an LAA SCell that are assigned by (E)PDCCH transmitted on another serving cell,
   - if the HARQ-ACK feedback for a PDSCH transmission is detected by the eNB, 'NACK/DTX' or 'any' state is counted as NACK, and 'DTX' state is ignored.
   - if no HARQ-ACK feedback is detected for a PDSCH transmission by the eNB
      - if physical uplink control channel (PUCCH) format 1b with channel selection is expected to be used by the UE, 'NACK/DTX' state corresponding to 'no transmission' as described in Clauses 10.1.2.2.1, 10.1.3.1 and 10.1.3.2.1 is counted as NACK, and 'DTX' state corresponding to 'no transmission' is ignored, as provided in 3GPP TS 36.213: "Evolved Universal Terrestrial Radio Access (E-UTRA); Physical layer procedures".
      - Otherwise, the HARQ-ACK for the PDSCH transmission is ignored.
- if a PDSCH transmission has two codewords, the HARQ-ACK value of each codeword is considered separately
- bundled HARQ-ACK across M subframes is considered as M HARQ-ACK responses.

If the eNB transmits transmissions including physical downlink control channel (PDCCH)/enhanced physical downlink control channel (EPDCCH) with downlink control information (DCI) format 0A/0B/4A/4B and not including PDSCH that are associated with channel access priority class *p* on a channel starting from time *t*₀, the eNB maintains the contention window value *CWₚ* and adjusts *CWₚ* before step 1 of the procedure described in clause 4.1.1 for those transmissions using the following steps:
1) for every priority class *p* ∈ {1,2,3,4} set *CWₚ = CW_{min,p}*
2) if less than 10% of the UL transport blocks scheduled by the eNB using Type 2 channel access procedure (described in clause 4.2.1.2) in the time interval between *t*₀ and *t*₀ *+ T_{co}* have been received successfully, increase *CWₚ* for every priority class *p* ∈ {1,2,3,4} to the next higher allowed value and remain in step 2; otherwise, go to step 1.
*T_{CO}* is computed as described in clause 4.2.1.0.3.

### 4.1.4.2 Contention window adjustment procedures for DL transmissions by gNB

If a gNB transmits transmissions including PDSCH that are associated with channel access priority class *p* on a channel, the gNB maintains the contention window value *CWₚ* and adjusts *CWₚ* before step 1 of the procedure described in clause 4.1.1 for those transmissions using the following steps:
1) For every priority class *p* ∈ {1,2,3,4}, set *CWₚ = CW_{min,p}.*
2) If HARQ-ACK feedback is available after the last update of *CWₚ* , go to step 3. Otherwise, if the gNB transmission after procedure described in clause 4.1.1 does not include a retransmission or is transmitted within a duration *T_{w}* from the end of the *reference duration* corresponding to the earliest DL channel occupancy after the last update of *CWₚ,* go to step 5; otherwise go to step 4.
3) The HARQ-ACK feedback(s) corresponding to PDSCH(s) in the reference duration for the latest DL channel occupancy for which HARQ-ACK feedback is available is used as follows:
   a. If at least one HARQ-ACK feedback is 'ACK' for PDSCH(s) with transport block based feedback or at least 10% of HARQ-ACK feedbacks is 'ACK' for PDSCH CBGs transmitted at least partially on the channel with code block group based feedback, go to step 1; otherwise go to step 4.
4) Increase *CWₚ* for every priority class *p* ∈ {1,2,3,4} to the next higher allowed value.
5) For every priority class p ∈ {1,2,3,4}, maintain CWₚ as it is; go to step 2.

The *reference duration* and duration *T_{w}* in the procedure above are defined as follows:
- The *reference duration* corresponding to a channel occupancy initiated by the gNB including transmission of PDSCH(s) is defined in this clause as a duration starting from the beginning of the channel occupancy until the end of the first slot where at least one unicast PDSCH is transmitted over all the resources allocated for the PDSCH, or until the end of the first transmission burst by the gNB that contains unicast PDSCH(s) transmitted over all the resources allocated for the PDSCH, whichever occurs earlier. If the channel occupancy includes a unicast PDSCH, but it does not include any unicast PDSCH transmitted over all the resources allocated for that PDSCH, then, the duration of the first transmission burst by the gNB within the channel occupancy that contains unicast PDSCH(s) is the *reference duration* for contention window size (CWS) adjustment.
- *T_{w}* = max (*T_{A}, T_{B} +* 1*ms*) where *T_{B}* is the duration of the transmission burst from start of the *reference duration* in ms and *T_{A} =* 5*ms* if the absence of any other technology sharing the channel cannot be guaranteed on a long-term basis (e.g. by level of regulation), and *T_{A}* = 10*ms* otherwise.

If a gNB transmits transmissions using Type 1 channel access procedures associated with the channel access priority class p on a channel and the transmissions are not associated with explicit HARQ-ACK feedbacks by the corresponding UE(s), the gNB adjusts *CWₚ* before step 1 in the procedures described in clause 4.1.1, using the latest *CWₚ* used for any DL transmissions on the channel using Type 1 channel access procedures associated with the channel access priority class *p*. If the corresponding channel access priority class p has not been used for any DL transmissions on the channel, *CWₚ = CW_{min,p}* is used.

### 4.1.4.3 Common procedures for CWS adjustments for DL transmissions

The following applies to the procedures described in clauses 4.1.4.1 and 4.1.4.2:
- If *CWₚ* = *CW_{max,p},* the next higher allowed value for adjusting *CWₚ* is *CW_{max,p}.*

- If the *CWₚ = CW_{max,p}* is consecutively used *K* times for generation of *Nᵢₙᵢₜ, CWₚ* is reset to *CW_{min,p}* only for that priority class *p* for which *CWₚ = CW_{max,p}* is consecutively used *K* times for generation of *Nᵢₙᵢₜ. K* is selected by eNB/gNB from the set of values {1, 2, ...,8} for each priority class *p* ∈ {1,2,3,4}.
From 3GPP TS 37.213 v17.2.0 (UL contention window adjustment)

### 4.2.2 Contention window adjustment procedures

If a UE transmits transmissions using Type 1 channel access procedures that are associated with channel access priority class p on a channel, the UE maintains the contention window value *CWₚ* and adjusts *CWₚ* for those transmissions before step 1 of the procedure described in clause 4.2.1.1, as described in this clause.

### 4.2.2.1 Contention window adjustment procedures for UL transmissions scheduled/configured by eNB

If a UE transmits transmissions using Type 1 channel access procedures that are associated with channel access priority class *p* on a channel, the UE maintains the contention window value *CWₚ* and adjusts *CWₚ* for those transmissions before step 1 of the procedure described in clause 4.2.1.1, using the following procedure:
- If the UE receives an UL grant or an autonomous uplink-downlink feedback indication (AUL-DFI), the contention window size for all the priority classes is adjusted as following:
   - If the new data indicator (NDI) value for at least one HARQ process associated with HARQ_identification (ID)_reference (ref) is toggled, or if the HARQ-ACK value(s) for at least one of the HARQ processes associated with HARQ_ID_ref received in the earliest AUL-DFI after *n_{ref}*+3 indicates ACK,
      - for every priority class *p* ∈ {1,2,3,4}, set *CWₚ = CW_{min,p}*;
   - Otherwise, increase *CWₚ* for every priority class *p* ∈ {1,2,3,4} to the next higher allowed value;
- If there exists one or more previous transmissions {*T*₀, ... , *Tₙ*} using Type 1 channel access procedure, from the start subframe(s) of the previous transmission(s) of which, N or more subframes have elapsed and neither UL grant nor AUL-DFI was received, where N = max *(contentionWindowSizeTimer, Tᵢ* burst length+1) if *contentionWindowSizeTimer* > 0 and N = 0 otherwise, for each transmission *Tᵢ*, *CWₚ* is adjusted as following:
   - increase *CWₚ* for every priority class *p* ∈ {1,2,3,4} to the next higher allowed value;
   - The *CWₚ* is adjusted once
- Else if the UE transmits transmissions using Type 1 channel access procedure before N subframes have elapsed from the start of previous UL transmission burst using Type 1 channel access procedure and neither UL grant nor AUL-DFI is received,
   - the *CWₚ* is unchanged.
- If the UE receives an UL grant or an AUL-DFI indicates feedback for one or more previous transmissions {*T*₀, ... , *Tₙ*} using Type 1 channel access procedure, from the start subframe(s) of the previous transmission(s) of which, N or more subframes have elapsed and neither UL grant nor AUL-DFI was received, where N = max *(contentionWindowSizeTimer, Tᵢ* burst length+1) if *contentionWindowSizeTimer >* 0 and N = 0 otherwise, the UE may recompute *CWₚ* as follows:
   - The UE reverts *CWₚ* to the value used to transmit at *n*_{*T*0} using Type 1 channel access procedure.
   - The UE updates *CWₚ* sequentially in the order of the transmission {*T*₀, ... , *Tₙ*}
   - If the NDI value for at least one HARQ process associated with HARQ_ID_ref is toggled, or if the HARQ-ACK value(s) for at least one of the HARQ processes associated with HARQ_ID_ref received in the earliest AUL-DFI after *n_{Ti}*+3 indicates ACK,
      - for every priority class *p* ∈ {1,2,3,4} set *CWₚ = CW_{min,p}.*
   - Otherwise, increase *CWₚ* for every priority class *p* ∈ {1,2,3,4}to the next higher allowed value.
- If the UE transmits transmissions using Type 1 channel access procedure before N subframes have elapsed from the start of previous UL transmission burst using Type 1 channel access procedure and neither UL grant nor AUL-DFI is received,
- *CWₚ* is unchanged.

HARQ_ID_ref is the HARQ process ID of UL-SCH in reference subframe *n_{ref}.* The reference subframe *n_{ref}* is determined as follows
   - If the UE receives an UL grant or an AUL-DFI in subframe *n_{g}* , subframe *n_{w}* is the most recent subframe before subframe *n_{g}* - 3 in which the UE has transmitted UL-SCH using Type 1 channel access procedure.
      - If the UE transmits transmissions including UL-SCH without gaps starting with subframe *n*₀ and in subframes *n*₀*, n*₁*,···, n_{w}* and the UL-SCH in subframe *n*₀ is not PUSCH Mode 1 that starts in the second slot of the subframe, reference subframe *n_{ref}* is subframe *n*₀.
      - If the UE transmits transmissions including PUSCH Mode 1 without gaps starting with second slot of subframe *n*₀ and in subframes *n*₀*, n*₁*,* ···, *n_{w}* and the, reference subframe *n_{ref}* is subframe *n*₀ and *n*₁,
      - otherwise, reference subframe *n_{ref}* is subframe *n_{w}*.
HARQ_ID_ref' is the HARQ process ID of UL-SCH in reference subframe *n_{Ti}.* The reference subframe *n_{Ti}* is determined as the start subframe of a transmission *Tᵢ* using Type 1 channel access procedure and of which, N subframes have elapsed and neither UL grant nor AUL-DFI was received.

If the AUL-DFI with DCI format 0A is indicated to a UE that is activated with AUL transmission and transmission mode 2 is configured for the UE for grant-based uplink transmissions, the spatial HARQ-ACK bundling shall be performed by logical OR operation across multiple codewords for the HARQ process not configured for autonomous UL transmission.

If *CWₚ* changes during an ongoing channel access procedure, the UE shall draw a counter *Nᵢₙᵢₜ* and applies it to the ongoing channel access procedure.

The UE may keep the value of *CWₚ* unchanged for every priority class *p* ∈ {1,2,3,4}, if the UE scheduled to transmit transmissions without gaps including PUSCH in a set subframes *n*₀*, n*₁*,···, n*_{*w-*1} using Type 1 channel access procedure, and if the UE is not able to transmit any transmission including PUSCH in the set of subframes.

The UE may keep the value of *CWₚ* for every priority class *p* ∈ {1,2,3,4} the same as that for the last scheduled transmission including PUSCH using Type 1 channel access procedure, if the reference subframe for the last scheduled transmission is also *n_{ref}.*

### 4.2.2.2 Contention window adjustment procedures for UL transmissions scheduled/configured by gNB

If a UE transmits transmissions using Type 1 channel access procedures that are associated with channel access priority class *p* on a channel, the UE maintains the contention window value *CWₚ* and adjusts *CWₚ* for those transmissions before step 1 of the procedure described in clause 4.2.1.1, using the following steps:
1) For every priority class *p* ∈ {1,2,3,4}, set *CWₚ = CW_{min,p}*;
2) If HARQ-ACK feedback is available after the last update of *CWₚ,* go to step 3. Otherwise, if the UE transmission after procedure described in clause 4.2.1.1 does not include a retransmission or is transmitted within a duration *T_{w}* from the end of the *reference duration* corresponding to the earliest UL channel occupancy after the last update of *CWₚ,* go to step 5; otherwise go to step 4.
3) The HARQ-ACK feedback(s) corresponding to PUSCH(s) in the *reference duration* for the latest UL channel occupancy for which HARQ-ACK feedback is available is used as follows:
   a. If at least one HARQ-ACK feedback is 'ACK' for PUSCH(s) with transport block (TB) based feedback or at least 10% of HARQ-ACK feedbacks are 'ACK' for PUSCH CBGs transmitted at least partially on the channel with code block group (CBG) based feedback, go to step 1; otherwise go to step 4.
4) Increase *CWₚ* for every priority class *p* ∈ {1,2,3,4} to the next higher allowed value;
5) For every priority class *p* ∈ {1,2,3,4}, maintain *CWₚ* as it is; go to step 2.

The HARQ-ACK feedback, *reference duration* and duration *T_{w}* in the procedure above are defined as the following:
- For the purpose of contention window adjustment in this clause, HARQ-ACK feedback for PUSCH(s) transmissions are expected to be provided to UE(s) explicitly or implicitly where explicit HARQ-ACK is determined based on the valid HARQ-ACK feedback in a corresponding CG-DFI as described in clause 10.5 in 3GPP TS 38.213: "NR; Physical layer procedures for control", and implicit HARQ-ACK feedback is determined based on the indication for a new transmission or retransmission in the DCI scheduling PUSCH(s) as follows:
   - If a new transmission is indicated, 'ACK' is assumed for the transport blocks or code block groups in the corresponding PUSCH(s) for the TB-based and CBG-based transmission, respectively.
   - If a retransmission is indicated for TB-based transmissions, 'NACK' is assumed for the transport blocks in the corresponding PUSCH(s).
   - If a retransmission is indicated for CBG-based transmissions, if a bit value in the code block group transmission information (CBGTI) field is '0' or '1' as described in clause 5.1.7.2 in 3GPP TS 38.214: "NR; Physical layer procedures for data", 'ACK' or 'NACK' is assumed for the corresponding CBG in the corresponding PUSCH(s), respectively.
- The *reference duration* corresponding to a channel occupancy initiated by the UE including transmission of PUSCH(s) is defined in this clause as a duration starting from the beginning of the channel occupancy until the end of the first slot where at least one PUSCH is transmitted over all the resources allocated for the PUSCH, or until the end of the first transmission burst by the UE that contains PUSCH(s) transmitted over all the resources allocated for the PUSCH, whichever occurs earlier. If the channel occupancy includes a PUSCH, but it does not include any PUSCH transmitted over all the resources allocated for that PUSCH, then, the duration of the first transmission burst by the UE within the channel occupancy that contains PUSCH(s) is the *reference duration* for CWS adjustment.
- *T_{w}* = max (*T_{A}, T_{B} +* 1*ms*) where *T_{B}* is the duration of the transmission burst from start of the *reference duration* in ms and *T_{A}* = 5*ms* if the absence of any other technology sharing the channel cannot be guaranteed on a long-term basis (e.g. by level of regulation), and *T_{A}* = 10*ms* otherwise.

If a UE transmits transmissions using Type 1 channel access procedures associated with the channel access priority class p on a channel and the transmissions are not associated with explicit or implicit HARQ-ACK feedbacks as described above in this clause, the UE adjusts *CWₚ* before step 1 in the procedures described in clause 4.2.1.1, using the latest *CWₚ* used for any UL transmissions on the channel using Type 1 channel access procedures associated with the channel access priority class *p*. If the corresponding channel access priority class p has not been used for any UL transmission on the channel, *CWₚ = CW_{min,p}* is used.

### 4.2.2.3 Common procedures for CWS adjustments for UL transmissions

The following applies to the procedures described in clauses 4.2.2.1 and 4.2.2.2:
- If *CWₚ* = *CW_{max,p},* the next higher allowed value for adjusting *CWₚ* is *CW_{max,p}.*
- If the *CWₚ = CW_{max,p}* is consecutively used *K* times for generation of *Nᵢₙᵢₜ, CWₚ* is reset to *CW_{min,p}* only for that priority class p for which *CWₚ* = *CW_{max,p}* is consecutively used *K* times for generation of *Nᵢₙᵢₜ. K* is selected by UE from the set of values {1, 2, ...,8} for each priority class *p* ∈ {1,2,3,4}.

From 3GPP TS 38.215 v17.1.0

| 5.1.27 Sidelink channel busy ratio (SL CBR) | |
|---|---|
| Definition | SL Channel Busy Ratio (SL CBR) measured in slot *n* is defined as the portion of sub-channels in the resource pool whose SL received signal strength indicator (RSSI) measured by the UE exceed a (pre-) configured threshold sensed over a CBR measurement window [*n-a, n*-1], wherein *a* is equal to 100 or 100.2^{µ} slots, according to higher layer parameter *sl-TimeWindowSizeCBR.* When UE is configured to perform partial sensing by higher layers (including when SL DRX is configured), SL RSSI is measured in slots where the UE performs partial sensing and where the UE performs PSCCH/PSSCH reception within the CBR measurement window. The calculation of SL CBR is limited within the slots for which the SL RSSI is measured. If the number of SL RSSI measurement slots within the CBR measurement window is below a (pre-)configured threshold, a (pre-)configured SL CBR value is used. |
| Applicable for | RRC_IDLE intra-frequency, RRC_IDLE inter-frequency, RRC_CONNECTED intra-frequency, RRC_CONNECTED inter-frequency |
| NOTE 1: The slot index is based on physical slot index. | |

From 3GPP TS 38.300 v17.0.0

### 5.7 SIDELINK

### 5.7.1 General

Sidelink supports UE-to-UE direct communication using the sidelink resource allocation modes, physical-layer signals/channels, and physical layer procedures below.

### 5.7.2 Sidelink resource allocation modes

Two sidelink resource allocation modes are supported: mode 1 and mode 2. In mode 1, the sidelink resource allocation is provided by the network. In mode 2, UE decides the SL transmission resources in the resource pool(s).

### 5.7.3 Physical sidelink channels and signals

Physical Sidelink Control Channel (PSCCH) indicates resource and other transmission parameters used by a UE for PSSCH. PSCCH transmission is associated with a DM-RS.

Physical Sidelink Shared Channel (PSSCH) transmits the TBs of data themselves, and control information for HARQ procedures and CSI feedback triggers, etc. At least 6 OFDM symbols within a slot are used for PSSCH transmission. PSSCH transmission is associated with a DM-RS and may be associated with a PT-RS.

Physical Sidelink Feedback Channel (PSFCH) carries HARQ feedback over the sidelink from a UE which is an intended recipient of a PSSCH transmission to the UE which performed the transmission. PSFCH sequence is transmitted in one PRB repeated over two OFDM symbols near the end of the sidelink resource in a slot.

The Sidelink synchronization signal consists of sidelink primary and sidelink secondary synchronization signals (S-PSS, S-SSS), each occupying 2 symbols and 127 subcarriers. Physical Sidelink Broadcast Channel (PSBCH) occupies 9 and 5 symbols for normal and extended CP cases respectively, including the associated DM-RS.

### 5.7.4 Physical layer procedures for sidelink

### 5.7.4.1 HARQ feedback

Sidelink HARQ feedback uses physical sidelink feedback channel (PSFCH) and can be operated in one of two options. In one option, which can be configured for unicast and groupcast, PSFCH transmits either ACK or NACK using a resource dedicated to a single PSFCH transmitting UE. In another option, which can be configured for groupcast, PSFCH transmits NACK, or no PSFCH signal is transmitted, on a resource that can be shared by multiple PSFCH transmitting UEs.

In sidelink resource allocation mode 1, a UE which received PSFCH can report sidelink HARQ feedback to gNB via PUCCH or PUSCH.

### 5.7.4.2 Power Control

For in-coverage operation, the power spectral density of the sidelink transmissions can be adjusted based on the pathloss from the gNB.

For unicast, the power spectral density of some sidelink transmissions can be adjusted based on the pathloss between the two communicating UEs.

### 5.7.4.3 CSI report

For unicast, channel state information reference signal (CSI-RS) is supported for CSI measurement and reporting in sidelink. A CSI report is carried in a sidelink MAC CE.

### 5.7.5 Physical layer measurement definition

For measurement on the sidelink, the following UE measurement quantities are supported:
- PSBCH reference signal received power (physical sidelink broadcast channel (PSBCH) reference signal received power (RSRP));
- PSSCH reference signal received power (PSSCH-RSRP);
- PSCCH reference signal received power (PSCCH-RSRP);
- Sidelink received signal strength indicator (SL RSSI);
- Sidelink channel occupancy ratio (SL CR);
- Sidelink channel busy ratio (SL CBR).
From 3GPP TS 36.843 v12.0.1

### 9.1.2 Resource allocation

From a transmitting UE's perspective, a UE can operate in two modes for resource allocation:
- Mode 1: eNodeB or Release-10 relay node schedules the exact resources used by a UE to transmit direct data and direct control information
   - FFS: if semi-static resource pool restricting the available resources for data and/or control is needed
- Mode 2: a UE on its own selects resources from resource pools to transmit direct data and direct control information
   - FFS if the resource pools for data and control are the same
   - FFS: if semi-static and/or pre-configured resource pool restricting the available resources for data and/or control is needed
- D2D communication capable UE shall support at least Mode 1 for in-coverage
- D2D communication capable UE shall support Mode 2 for at least edge-of-coverage and/or out-of-coverage

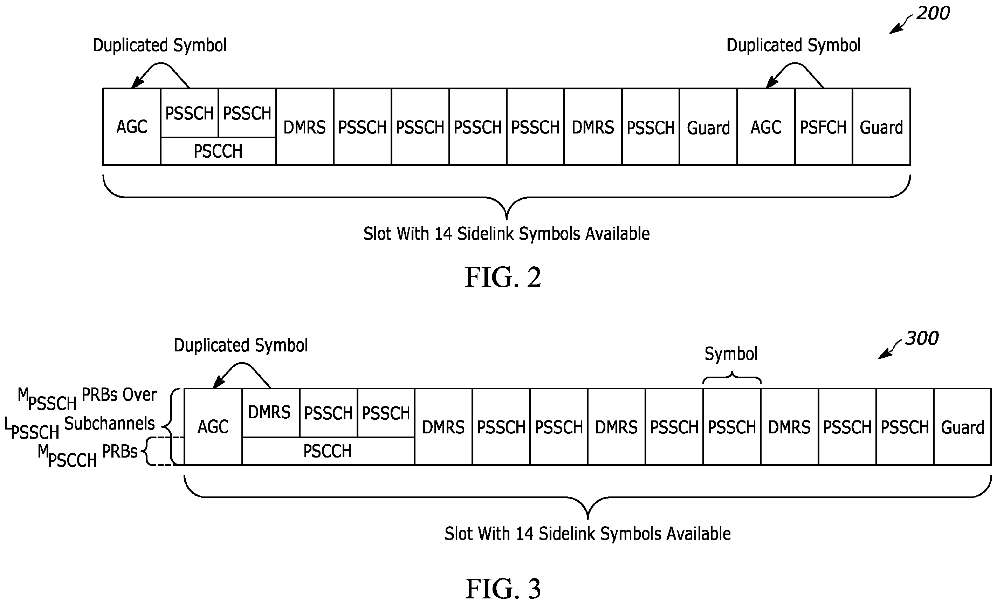

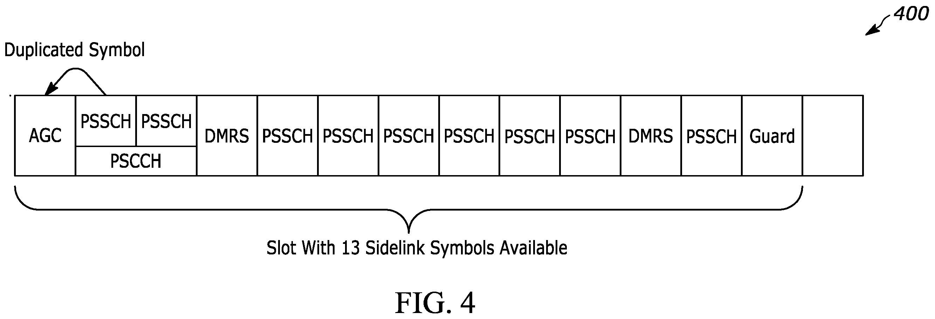

FIGS. 2-4 illustrate examples of a sidelink slot. More specifically, FIG. 2 illustrates a sidelink slot structure 200 with 14 symbols available, FIG. 3 illustrates a sidelink slot structure 300 with 14 symbols available, and FIG. 4 illustrates a sidelink slot structure 400 with 13 symbols available.

The sidelink slot structure contains automatic gain control (AGC) symbol at the beginning of the slot then PSCCH symbol followed by the PSSCH symbols and the last symbol in the slot is configured as a gap symbol (guard as shown in the FIGS. 2-4) to enable switching time from transmit (Tx) to receive (Rx).

Resource pool may be (pre)configured with one or two PSFCH symbol(s), using a PSFCH period of, for example, 1, 2, 4, 8 slots and the slots where the PSFCH occurs maybe configured with additional AGC symbol and a gap symbols as seen from FIGS. 2-4 to enable switching from Tx to Rx for the reception of HARQ feedback.

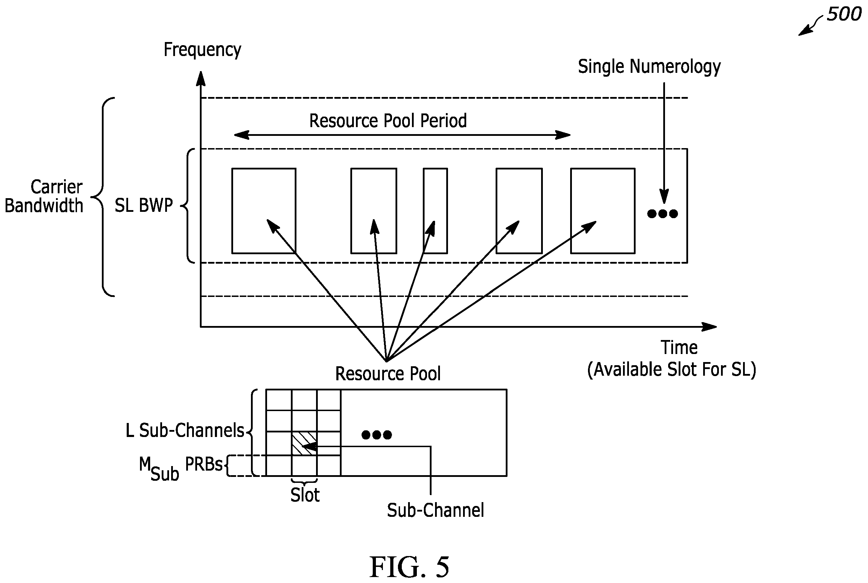

A resource pool (RP) can be shared by several UEs for their SL transmissions. A resource pool consists of contiguous physical resource blocks (PRBs) and contiguous or non-contiguous slots that have been (pre-)configured for sidelink (SL) transmissions. A resource pool must be defined within the SL bandwidth part (BWP) (See FIG. 5). FIG. 5 illustrates an exemplary resource pool (RP) structure 500.

An RP can be used for all transmission types (i.e., unicast, groupcast, and broadcast). A UE can be (pre-)configured with multiple RPs for transmission (transmit RPs) and with multiple RPs for reception (receive RPs). A UE can then receive data on resource pools used for SL transmissions by other UEs, while the UE can still transmit on the SL using its transmit resource pools. In the frequency domain, a resource pool is divided into a (pre-)configured number *L* of contiguous sub-channels, where a sub-channel consists of a group of consecutive PRBs in a slot. The number *M*sub of PRBs in a sub-channel corresponds to the sub-channel size, which is (pre-)configured within a resource pool. In NR V2X SL, the sub-channel size Msub can be equal to 10, 12, 15, 20, 25, 50, 75, or 100 PRBs. A sub-channel represents the smallest unit for a sidelink data transmission or reception.

A sidelink transmission can use one or multiple sub-channels. In the time domain, the slots that are part of a resource pool are (pre-)configured and occur with a periodicity of 10240ms. The slots that are part of a resource pool can be (pre-)configured with a bitmap. The length of the bitmap can be equal to 10, 11, 12, ..., 160. At each slot of a resource pool, only a subset of consecutive symbols are (pre-)configured for the sidelink , i.e., a subset out of the 14 or 12 symbols per slot for a normal or extended cyclical prefix (CP), respectively. The subset of SL symbols per slot is indicated with a starting symbol and a number of consecutive symbols, where these two parameters are (pre-)configured per resource pool. The number of consecutive SL symbols can vary between 7 and 14 symbols, e.g., depending on the physical channels which are carried within a slot (e.g., see FIGS. 2-4).

3GPP TS 37.213 v17.2.0 introduces several definitions and provisions for uplink and downlink unlicensed channel access, however for sidelink the present disclosure provides the following definitions and characteristics. For sidelink, a reference duration corresponding to a channel occupancy initiated by the UE including transmission of PSSCH(s) can be defined as either (1) a duration starting from the beginning of the channel occupancy until the end of the first slot where at least one PSSCH is transmitted, or until the end of the first transmission burst by the UE that contains PSSCH(s), whichever occurs earlier; or (2) the duration of the first transmission burst by the UE within the channel occupancy that contains PSSCH(s).

Channel occupancy refers to transmission(s) on channel(s) by eNB/gNB/UE(s) after performing the corresponding channel access procedures in this clause.

A sidelink transmission burst is defined as a set of transmissions from a UE without any gaps greater than 16*µs.* Transmissions from a UE separated by a gap of more than 16*µs* are considered as separate SL transmission bursts. A UE can transmit transmission(s) after a gap within a *SL transmission burst* without sensing the corresponding channel(s) for availability.

### CWS update in case of no HARQ feedback

According to an embodiment, if there is no feedback enabled for a transmission, the CWₚ value, as noted above, is increased to the next higher possible value after a first CWₚ value has been applied for a first number *K_{noHARQ}* times.

According to an embodiment, if there is no feedback enabled for a transmission, the CWₚ value is decreased to the lowest possible value after the highest CWₚ value has been applied for a first number *K_{noHARQ}* times.
- According to an implementation, the increase/decrease is applied per priority class *p*.
   ∘ According to an implementation, the value *K_{noHARQ}* is selected by a UE from a set of values. In a specific implementation, the value *K_{noHARQ}* is selected by the UE from the set of values {1, 2, ..., 8}. As a further example, the value *K_{noHARQ}* could alternatively be selected by the UE from the set of values {1, 2, 3, 4}. Other set values are further possible without departing from the scope of the present application. According to an alternative implementation, the value *K_{noHARQ}* is determined per resource pool from a set of values. In a specific implementation, the value *K_{noHARQ}* is determined as one of the values from the set of values {1, 2, ..., 8}. Other set values are further possible without departing from the scope of the present application. According to an implementation, the *K_{noHARQ}* value increases for higher CWₚ values, or generally the *K_{noHARQ}* value is different for different CWₚ values.
- According to an alternative embodiment, if there is no feedback for a transmissions, the CWₚ value is selected randomly from the set of allowed values. According to an implementation, a new CWₚ value is selected after the latest CWₚ value has been applied for a first number *K_{noHARQ}* times.
   ∘ According to an implementation, the value *K_{noHARQ}* is selected by a UE from a set of values. In a specific implementation, the value *K_{noHARQ}* is selected by the UE from the set of values {1, 2, ..., 8}. As noted above alternative sets of values are possible without departing from the teachings of the present application. According to an alternative implementation, the value *K_{noHARQ}* is determined per resource pool from a set of values. In a specific implementation, the value *K_{noHARQ}* is determined as one of the values from the set of values {1, 2, ..., 8}. Other set values are further possible without departing from the scope of the present application. According to an implementation, the *K_{noHARQ}* value increases for higher CWₚ values, or generally the *K_{noHARQ}* value is different for different CWₚ values.

### CWS update in case of NACK-only feedback

- According to an embodiment, if there is NACK-only feedback enabled for a transmission, the CWₚ value is increased to the next higher possible value after a second number *K_{NACKonly}* of NACK feedback has been received.
- According to an embodiment, if there is NACK-only feedback enabled for a transmission, the CWₚ value is decreased to the lowest possible value after the highest CWₚ value has been applied for a second number *K_{NACKonly}* times.
   ∘ According to an implementation, the increase/decrease is applied per priority class *p*.
   ∘ According to an implementation, the counter of NACK feedback is reset to zero if the CWₚ value is decreased.
   ∘ According to an implementation, the value *K_{NACKonly}* is selected by a UE from a set of values. In a specific implementation, the value *K_{NACKonly}* is selected by the UE from the set of values {1, 2, ..., 8}. According to an alternative implementation, the value *K_{NACKonly}* is determined per resource pool from a set of values. In a specific implementation, the value *K_{NACKonly}* is determined as one of the values from the set of values {1, 2, ..., 8}. Other set values are further possible without departing from the scope of the present application. According to an implementation, the *K_{NACKonly}* value increases for higher CWₚ values, or generally the *K_{NACKonly}* value is different for different CWₚ values.
- According to an alternative embodiment, if there is NACK-only feedback enabled for a transmissions, the CWₚ value is selected randomly from the set of allowed values (see also section 3.1.3). According to an implementation, a new CWₚ value is selected after the latest CWₚ value has been applied for a first number *K_{NACKonly}* times.
   ∘ According to an implementation, the value *K_{noHARQ}* is selected by a UE from a set of values. In a specific implementation, the value *K_{NACKonly}* is selected by the UE from the set of values {1, 2, ..., 8}. According to an alternative implementation, the value *K_{NACKonly}* is determined per resource pool from a set of values. In a specific implementation, the value *K_{NACKonly}* is determined as one of the values from the set of values {1, 2, ..., 8}. Other set values are further possible without departing from the scope of the present application. According to an implementation, the *K_{noHARQ}* value increases for higher CWₚ values, or generally the *K_{NACKonly}* value is different for different CWₚ values.

### Allowed CWₚsizes

The number of values in the allowed contention window sizes for sidelink channel access may be limited (e.g. such as for priority class 3,4) compared to unicast.

TS 37.213 defines the following channel access priority classes and corresponding parameters for DL and UL channel access, respectively:

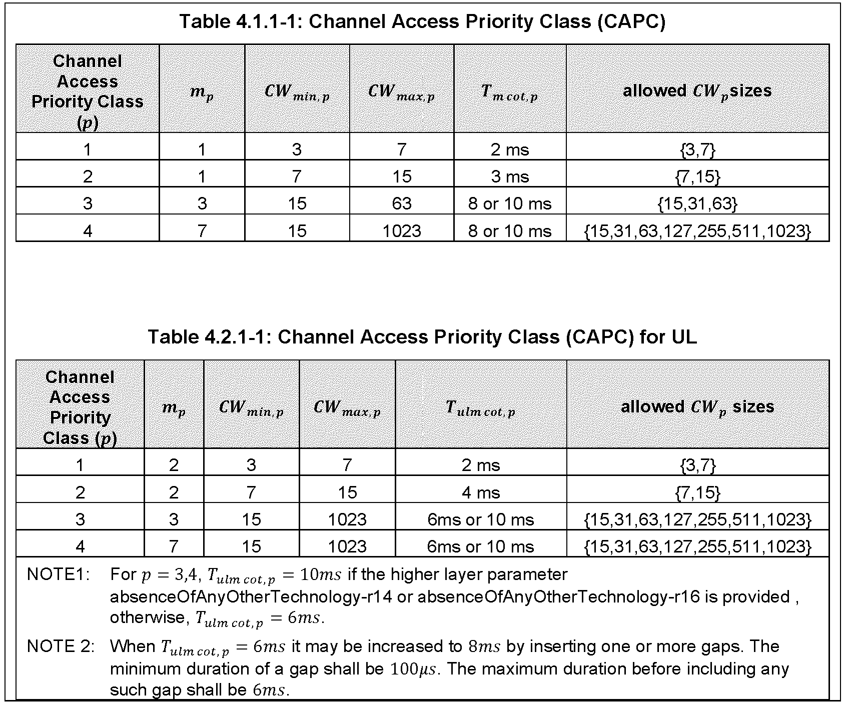

According to the embodiment, for channel access in sidelink, a subset of the values "allowed *CWₚ*sizes" from these tables can be used for sidelink channel access. For example, instead of the set {15,31,63,127,255,511,1023} as for channel access priority class 3 and 4 in UL channel access, the set {15,31,63,127} can be used for SL channel access, though the values do not have to be consecutive with respect to the existing set, so that an alternative set could be {15,63,255,1023}. This could be beneficial in the "no HARQ feedback" case where the CWS is increased automatically, so that extremely large values might be avoided.

### CWS update based on channel busy ratio (CBR)

According to an embodiment, the CWₚ value is selected as a function of the CBR. In an implementation the UE selects one out of the allowed *CWₚ* sizes for sidelink channel access depending on the CBR. For example
- if the CBR is below a first threshold, the UE selects the smallest allowed *CWₚ* size for sidelink channel access.
   ∘ For example when using the set {15,31,63,127,255,511,1023} for the allowed *CWₚ* sizes, this means selecting the value 15.
- if the CBR is above a first threshold and below a second threshold, the UE selects the second but smallest allowed *CWₚ* size for sidelink channel access.
   ∘ For example when using the set {15,31,63,127,255,511,1023} for the allowed *CWₚ* sizes, this means selecting the value 31.
- etc...
- if the CBR is above a third threshold the UE selects the second but largest allowed *CWₚ* size for sidelink channel access.
   ∘ For example when using the set {15,31,63,127,255,511,1023} for the allowed *CWₚ* sizes, this means selecting the value 1023.
- Each of the first/second/third etc. threshold values can be predefined, e.g. configurable by the network. For example the configuration may be UE-specific or resource pool specific.

This can be beneficial in the "no HARQ feedback" case because it allows a differentiation of contention window sizes as a function of an available measurement.

The thresholds and mapping to *CWₚ* values can be priority class specific, i.e. a first threshold applicable for priority class p=1 resulting in the lowest *CWₚ* for p=1 being chosen is a different threshold than applicable for pririty class p=2 resulting in the lowest *CWₚ* for p=2 being chosen.

According to an implementation, the thresholds constitute a plurality of CBR ranges. The first CBR range is between 0 and the first threshold, the second CBR range is between the first threshold and the second threshold, and so forth (where it is a matter of choice whether the threshold value itself belongs to the lower or higher range). Then each such range can be associated with a *CWₚ* size from a set of allowed *CWₚ* sizes. The corresponding relations between CBR range and *CWₚ* size can be represented by a lookup table, which may be preconfigured by the network such as by RRC. Furthermore the corresponding relations between CBR range and *CWₚ* size can be specific to a resource pool.

As presently described, several possible embodiments have been discussed. At least a couple of examples of discussed possible embodiments include:
increasing CWS only after a configurable number of NACKs;
increasing CWS after a configurable number of transmissions;
decreasing CWS after no feedback if NACK-only is configured; and
decreasing CWS after no feedback for a configurable number of transmssions if NACK-only is configured.

Such a list only represents a partial list of the possible embodiments, as noted above.

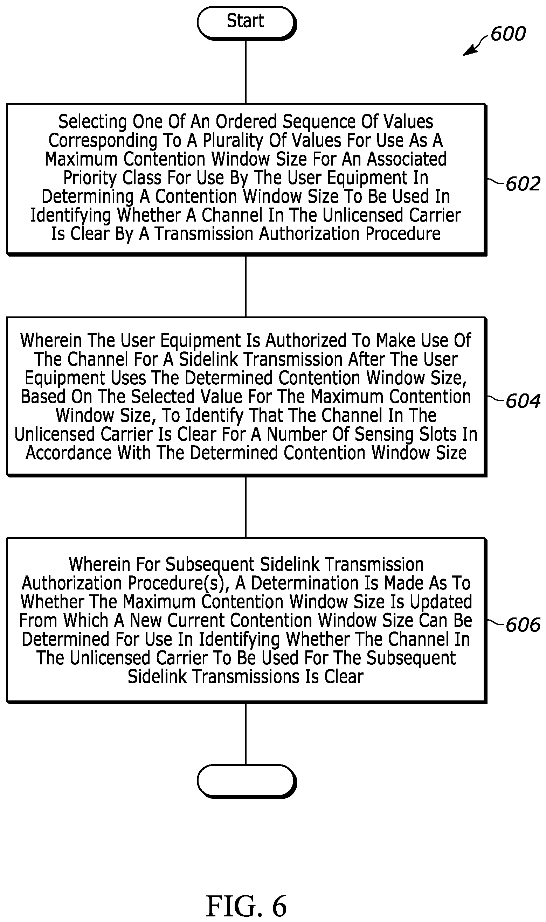

FIG. 6 illustrates a flow diagram 600 of a method in a user equipment. The method includes selecting 602 one of an ordered sequence of values corresponding to a plurality of values for use as a maximum contention window size for an associated priority class for use by the user equipment in determining a contention window size to be used in identifying whether a channel in the unlicensed carrier is clear by a transmission authorization procedure. The user equipment is authorized to make use of the channel for a sidelink transmission after the user equipment uses the determined contention window size, based on the selected value for the maximum contention window size, to identify that the channel in the unlicensed carrier is clear for a number of sensing slots in accordance with the determined contention window size 604. For subsequent sidelink transmission authorization procedure(s), a determination is made as to whether the maximum contention window size is updated from which a new current contention window size can be determined for use in identifying whether the channel in the unlicensed carrier to be used for the subsequent sidelink transmissions is clear 606.

While a transmission authorization procedure is specifically noted, it is possible that this could alternatively be referenced as a channel access procedure.

It is further noted that for purposes of identifying an unlicensed carrier that is clear, it is possible that the contention window could be satisfied by identifying an appropriate number of idle slots that may not be consecutive. For example if the determined CWS is 2 sensing slots, the first idle slot can be at time t1 (reducing the counter to 1), then the channel can be busy for a period of time including a period of time that is potentially a long time, and then at a later time t2 the channel could be sensed as idle again (reducing the counter to 0), so that after the two sensing slots that were identified as being idle are detected, that the UE is allowed to access the channel.

Further still, when an update to the contention window size is identified as being desired, in at least some instances, the update could be delayed until a further transmission that is not in the same channel occupancy, which could correspond to the next time that the channel occupancy engine for performing the authorization checking routine is performed.

In some instances, the sidelink communication can have an associated type of feedback, wherein, when the associated type of feedback is a no HARQ feedback, the maximum contention window size can be updated after a configured number of transmission authorization procedures using a particular selected one of the ordered sequence of values corresponding to a particular maximum contention window size.

The number of transmissions could correspond to a number of slots that have transmissions. Still further, it could alternatively correspond to a number of times that the channel access procedure for one or more transmissions is executed.

In some instances, after the configured number of transmission authorization procedures using the particular selected one of the ordered sequence of values have occurred, a next one of the ordered sequence of values corresponding to a next higher value for use as a maximum contention window size can be selected. When there is no next higher value in the plurality of values for use as the maximum contention window size for the associated priority class, the next one of the ordered sequence of values corresponding to the lowest possible value for use as a maximum contention window size in the ordered sequence of values can be selected.

In other instances, a transmission authorization procedure can be associated with a particular one of a plurality of possible priority classes, wherein the configured number of transmission authorization procedures used for determining when to update the maximum contention window size associated with the particular one of the plurality of possible priority classes can be dependent on the configured number of transmission authorization procedures associated with the particular priority class.

In some of these instances, the configured number of transmission authorization procedures for each one of the plurality of possible priority classes, which triggers an update in the associated maximum contention window size can be separately defined.

In other of these instances, the configured number of transmission authorization procedures for each one of the plurality of possible priority classes, can be based upon the number of associated values for use as a maximum contention window size in the ordered sequence of values, which are associated with the particular priority class.

In some instances, after the configured number of transmission authorization procedures using the particular selected one of the ordered sequence of values, a next one of the ordered sequence of values can be randomly selected from the ordered sequence of values for use as the maximum contention window size for the associated priority class.

In instances, where the values within the set are selected randomly, it may be possible that the sequence of values could include a sequence of values that does not follow in a lowest-to-highest or highest-to-lowest ordering.

In some instances the sidelink communication has an associated type of feedback, wherein, when the associated type of feedback is a NACK-only feedback or an ACK/NACK feedback, the maximum contention window size can be updated after a configured number of NACK feedback for sidelink transmissions within a reference duration has been received, where the reference duration includes sidelink transmission(s) from the beginning of a channel occupancy.

In some of these instances, after the configured number of NACK feedback has been received, a next one of the ordered sequence of values corresponding to a next higher value for use as a maximum contention window size is selected. When there is no next higher value in the plurality of values for use as the maximum contention window size for the associated priority class, the next one of the ordered sequence of values corresponding to the lowest possible value for use as a maximum contention window size in the ordered sequence of values can be selected.

In other of these instances, each transmission authorization procedure can be associated with a particular one of a plurality of possible priority classes, wherein the configured number of transmission authorization procedures used for determining when to update the maximum contention window size associated with the particular one of the plurality of possible priority classes can be dependent on the configured number of transmission authorization procedure associated with the particular priority class.

In still other of these instances, a count associated with a tracking of the number of NACK feedback that has been received can be reset to zero after the maximum contention window size has been updated.

Further yet in other of these instances, each transmission authorization procedure can be associated with a particular one of a plurality of possible resource pools, where each resource pool corresponds to a different subset of a plurality of resources associated with the unlicensed carrier, wherein the configured number of transmission authorization procedures used for determining when to update the maximum contention window size associated with the particular one of the plurality of possible resource pools can be dependent on the configured number of transmission authorization procedure associated with the particular resource pool having been transmitted.

In some instances, each of the sidelink transmissions can have a corresponding type of transmission from a list including unicast, groupcast or broadcast, wherein for a transmission authorization procedure for a channel occupancy including at least some of the types of transmission, the ordered sequence of values corresponding to the plurality of values for use as the maximum contention window size can be truncated to a number less than all of the values for one or more of a particular associated priority class.

In some instances, each of the sidelink transmissions can have a corresponding type of transmission from a list including unicast, groupcast or broadcast, wherein for a transmission authorization procedure for a channel occupancy including at least some of the types of transmission, the ordered sequence of values corresponding to the plurality of values for use as the maximum contention window size can be a subset corresponding to a number less than all of the values for one or more of a particular associated priority class.

In some instances, when selecting one of an ordered sequence of values corresponding to a plurality of values for use as a maximum contention window size for an associated priority class, a channel busy ratio can be determined, wherein the channel busy ratio can be compared to one or more thresholds, where depending upon the outcome of the comparisons of the channel busy ratio to the one or more thresholds will determine which one of the ordered sequence of values corresponding to the plurality of values for use as the maximum contention window size for the associated priority class is selected.

In some of these instances, a number of thresholds against which the channel busy ratio is compared can be one less than a number of values in the ordered sequence of values for the associated priority class.

It should be understood that, notwithstanding the particular steps as shown in the figures, a variety of additional or different steps can be performed depending upon the embodiment, and one or more of the particular steps can be rearranged, repeated or eliminated entirely depending upon the embodiment. Also, some of the steps performed can be repeated on an ongoing or continuous basis simultaneously while other steps are performed. Furthermore, different steps can be performed by different elements or in a single element of the disclosed embodiments.

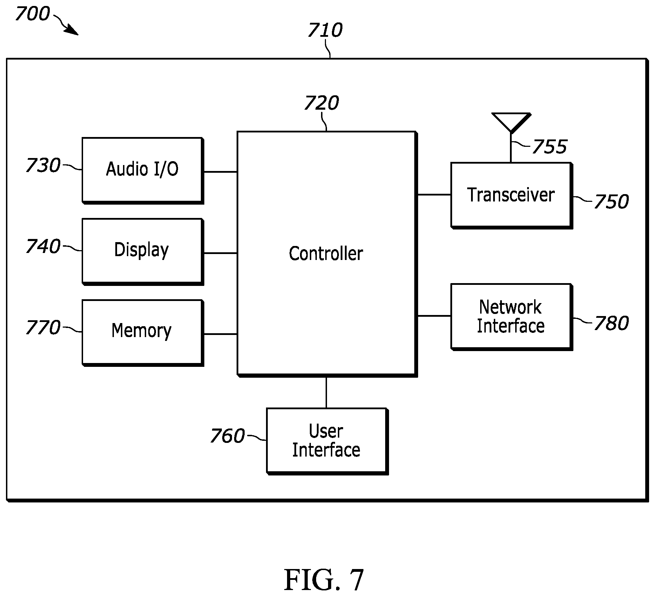

FIG. 7 is an example block diagram of an apparatus 700, such as the wireless communication device 110, according to a possible embodiment. The apparatus 700 can include a housing 710, a controller 720 within the housing 710, audio input and output circuitry 730 coupled to the controller 720, a display 740 coupled to the controller 720, a transceiver 750 coupled to the controller 720, an antenna 755 coupled to the transceiver 750, a user interface 760 coupled to the controller 720, a memory 770 coupled to the controller 720, and a network interface 780 coupled to the controller 720. The apparatus 700 can perform the methods described in all the embodiments.

The display 740 can be a viewfinder, a liquid crystal display (LCD), a light emitting diode (LED) display, a plasma display, a projection display, a touch screen, or any other device that displays information. The transceiver 750 can include a transmitter and/or a receiver. The audio input and output circuitry 730 can include a microphone, a speaker, a transducer, or any other audio input and output circuitry. The user interface 760 can include a keypad, a keyboard, buttons, a touch pad, a joystick, a touch screen display, another additional display, or any other device useful for providing an interface between a user and an electronic device. The network interface 780 can be a Universal Serial Bus (USB) port, an Ethernet port, an infrared transmitter/receiver, an IEEE 1394 port, a WLAN transceiver, or any other interface that can connect an apparatus to a network, device, or computer and that can transmit and receive data communication signals. The memory 770 can include a random access memory, a read only memory, an optical memory, a solid state memory, a flash memory, a removable memory, a hard drive, a cache, or any other memory that can be coupled to an apparatus.

The apparatus 700 or the controller 720 may implement any operating system, such as Microsoft Windows^{®}, UNIX^{®}, or LINUX^{®}, Android^{™}, or any other operating system. Apparatus operation software may be written in any programming language, such as C, C++, Java or Visual Basic, for example. Apparatus software may also run on an application framework, such as, for example, a Java^{®} framework, a .NET^{®} framework, or any other application framework. The software and/or the operating system may be stored in the memory 770 or elsewhere on the apparatus 700. The apparatus 700 or the controller 720 may also use hardware to implement disclosed operations. For example, the controller 720 may be any programmable processor. Disclosed embodiments may also be implemented on a general-purpose or a special purpose computer, a programmed microprocessor or microcontroller, peripheral integrated circuit elements, an application-specific integrated circuit or other integrated circuits, hardware/electronic logic circuits, such as a discrete element circuit, a programmable logic device, such as a programmable logic array, field programmable gate-array, or the like. In general, the controller 720 may be any controller or processor device or devices capable of operating an apparatus and implementing the disclosed embodiments. Some or all of the additional elements of the apparatus 700 can also perform some or all of the operations of the disclosed embodiments.

The method of this disclosure can be implemented on a programmed processor. However, the controllers, flowcharts, and modules may also be implemented on a general purpose or special purpose computer, a programmed microprocessor or microcontroller and peripheral integrated circuit elements, an integrated circuit, a hardware electronic or logic circuit such as a discrete element circuit, a programmable logic device, or the like. In general, any device on which resides a finite state machine capable of implementing the flowcharts shown in the figures may be used to implement the processor functions of this disclosure.

While this disclosure has been described with specific embodiments thereof, it is evident that many alternatives, modifications, and variations will be apparent to those skilled in the art. For example, various components of the embodiments may be interchanged, added, or substituted in the other embodiments. Also, all of the elements of each figure are not necessary for operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting. Various changes may be made without departing from the spirit and scope of the disclosure.

In this document, relational terms such as "first," "second," and the like may be used solely to distinguish one entity or action from another entity or action without necessarily requiring or implying any actual such relationship or order between such entities or actions. The phrase "at least one of," "at least one selected from the group of," or "at least one selected from" followed by a list is defined to mean one, some, or all, but not necessarily all of, the elements in the list. The terms "comprises," "comprising," "including," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that comprises the element. Also, the term "another" is defined as at least a second or more. The terms "including," "having," and the like, as used herein, are defined as "comprising." Furthermore, the background section is written as the inventor's own understanding of the context of some embodiments at the time of filing and includes the inventor's own recognition of any problems with existing technologies and/or problems experienced in the inventor's own work.

Further aspects of the invention are provided by the subject matter of the following numbered clauses:
Clause 1. A user equipment (UE) for sidelink communication, the UE comprising: at least one controller coupled with at least one memory and configured to cause the UE to: select one of an ordered sequence of values corresponding to a plurality of values for use as a maximum contention window size for an associated priority class for use by the UE in determining a contention window size to be used in identifying whether a channel in an unlicensed carrier is clear by a transmission authorization procedure; wherein the UE is authorized to make use of the channel for a sidelink transmission after the controller of the UE uses the determined contention window size, based on the selected value for the maximum contention window size to identify that the channel in the unlicensed carrier as determined using a transceiver is clear for a number of sensing slots in accordance with the determined contention window size; and wherein for subsequent sidelink transmission authorization procedure(s), a determination is made by the controller as to whether the maximum contention window size is updated from which a new current contention window size can be determined for use in identifying using the transceiver whether the channel in the unlicensed carrier to be used for the subsequent sidelink transmissions is clear.
Clause 2. The UE in accordance with clause 1, wherein the sidelink communication has an associated type of feedback; and wherein, when the associated type of feedback is a no HARQ feedback, the maximum contention window size is updated after a number of transmission authorization procedures using a particular selected one of the ordered sequence of values corresponding to a particular maximum contention window size.
Clause 3. The UE in accordance with clause 2, wherein the number of transmission authorization procedures using a particular selected one of the ordered sequence of values corresponding to a particular maximum contention window size is configurable.
Clause 4. The UE in accordance with clause 1, wherein after a number of transmission authorization procedures using a particular selected one of the ordered sequence of values, a next one of the ordered sequence of values corresponding to a next higher value for use as a maximum contention window size is selected; when there is no next higher value in the plurality of values for use as the maximum contention window size for the associated priority class, the next one of the ordered sequence of values corresponding to the lowest possible value for use as a maximum contention window size in the ordered sequence of values is selected.
Clause 5. The UE in accordance with clause 1, wherein the sidelink communication has an associated type of feedback; and wherein, when the associated type of feedback is a NACK-only feedback or an ACK/NACK feedback, the maximum contention window size is updated after a number of NACK feedback for sidelink transmissions within a reference duration has been received, wherein the reference duration comprises sidelink transmission(s) from the beginning of a channel occupancy.
Clause 6. The UE in accordance with clause 1, wherein each of the sidelink transmissions has a corresponding type of transmission from a list including unicast, groupcast or broadcast; wherein for a transmission authorization procedure for a channel occupancy including at least some of the types of transmission, the ordered sequence of values corresponding to the plurality of values for use as the maximum contention window size is a subset corresponding to a number less than all of the values for one or more of a particular associated priority class.
Clause 7. A processor for wireless communication in a user equipment (UE) for sidelink communication, the processor comprising: at least one controller coupled with at least one memory and configured to cause the processor to: select one of an ordered sequence of values corresponding to a plurality of values for use as a maximum contention window size for an associated priority class for use by the UE in determining a contention window size to be used in identifying whether a channel in an unlicensed carrier is clear by a transmission authorization procedure; wherein the UE is authorized to make use of the channel for a sidelink transmission after the controller of the UE uses the determined contention window size, based on the selected value for the maximum contention window size to identify that the channel in the unlicensed carrier as determined using a transceiver is clear for a number of sensing slots in accordance with the determined contention window size; and wherein for subsequent sidelink transmission authorization procedure(s), a determination is made by the controller as to whether the maximum contention window size is updated from which a new current contention window size can be determined for use in identifying using the transceiver whether the channel in the unlicensed carrier to be used for the subsequent sidelink transmissions is clear.
Clause 8. The processor in accordance with clause 7, wherein the sidelink communication has an associated type of feedback; and wherein, when the associated type of feedback is a no HARQ feedback, the maximum contention window size is updated after a number of transmission authorization procedures using a particular selected one of the ordered sequence of values corresponding to a particular maximum contention window size.
Clause 9. The processor in accordance with clause 8, wherein the number of transmission authorization procedures using a particular selected one of the ordered sequence of values corresponding to a particular maximum contention window size is configurable.
Clause 10. The processor in accordance with clause 7, wherein after a number of transmission authorization procedures using a particular selected one of the ordered sequence of values, a next one of the ordered sequence of values corresponding to a next higher value for use as a maximum contention window size is selected; when there is no next higher value in the plurality of values for use as the maximum contention window size for the associated priority class, the next one of the ordered sequence of values corresponding to the lowest possible value for use as a maximum contention window size in the ordered sequence of values is selected.
Clause 11. The processor in accordance with clause 7, wherein the sidelink communication has an associated type of feedback; and wherein, when the associated type of feedback is a NACK-only feedback or an ACK/NACK feedback, the maximum contention window size is updated after a number of NACK feedback for sidelink transmissions within a reference duration has been received, wherein the reference duration comprises sidelink transmission(s) from the beginning of a channel occupancy.
Clause 12. The processor in accordance with clause 7, wherein each of the sidelink transmissions has a corresponding type of transmission from a list including unicast, groupcast or broadcast; wherein for a transmission authorization procedure for a channel occupancy including at least some of the types of transmission, the ordered sequence of values corresponding to the plurality of values for use as the maximum contention window size is a subset corresponding to a number less than all of the values for one or more of a particular associated priority class.
Clause 13. A method in a user equipment (UE) for sidelink communication, the method comprising: selecting one of an ordered sequence of values corresponding to a plurality of values for use as a maximum contention window size for an associated priority class for use by the UE in determining a contention window size to be used in identifying whether a channel in an unlicensed carrier is clear by a transmission authorization procedure; wherein the UE is authorized to make use of the channel for a sidelink transmission after the UE uses the determined contention window size, based on the selected value for the maximum contention window size, to identify that the channel in the unlicensed carrier is clear for a number of sensing slots in accordance with the determined contention window size; and wherein for subsequent sidelink transmission authorization procedure(s), a determination is made as to whether the maximum contention window size is updated from which a new current contention window size can be determined for use in identifying whether the channel in the unlicensed carrier to be used for the subsequent sidelink transmissions is clear.
Clause 14. The method in accordance with clause 13, wherein the sidelink communication has an associated type of feedback; and wherein, when the associated type of feedback is a no HARQ feedback, the maximum contention window size is updated after a number of transmission authorization procedures using a particular selected one of the ordered sequence of values corresponding to a particular maximum contention window size.
Clause 15. The method in accordance with clause 14, wherein the number of transmission authorization procedures using a particular selected one of the ordered sequence of values corresponding to a particular maximum contention window size is configurable.
Clause 16. The method in accordance with clause 13, wherein after a number of transmission authorization procedures using a particular selected one of the ordered sequence of values, a next one of the ordered sequence of values corresponding to a next higher value for use as a maximum contention window size is selected; when there is no next higher value in the plurality of values for use as the maximum contention window size for the associated priority class, the next one of the ordered sequence of values corresponding to the lowest possible value for use as a maximum contention window size in the ordered sequence of values is selected.
Clause 17. The method in accordance with clause 13, wherein after the number of transmission authorization procedures using the particular selected one of the ordered sequence of values, a next one of the ordered sequence of values is randomly selected from the ordered sequence of values for use as the maximum contention window size for the associated priority class.
Clause 18. The method in accordance with clause 13, wherein the sidelink communication has an associated type of feedback; and wherein, when the associated type of feedback is a NACK-only feedback or an ACK/NACK feedback, the maximum contention window size is updated after a number of NACK feedback for sidelink transmissions within a reference duration has been received, wherein the reference duration comprises sidelink transmission(s) from the beginning of a channel occupancy.
Clause 19. The method in accordance with clause 18, wherein each transmission authorization procedure is associated with a particular one of a plurality of possible resource pools, where each resource pool corresponds to a different subset of a plurality of resources associated with the unlicensed carrier; wherein the number of transmission authorization procedures used for determining when to update the maximum contention window size associated with the particular one of the plurality of possible resource pools is dependent on the number of transmission authorization procedure associated with the particular resource pool having been transmitted.
Clause 20. The method in accordance with clause 13, wherein each of the sidelink transmissions has a corresponding type of transmission from a list including unicast, groupcast or broadcast; wherein for a transmission authorization procedure for a channel occupancy including at least some of the types of transmission, the ordered sequence of values corresponding to the plurality of values for use as the maximum contention window size is a subset corresponding to a number less than all of the values for one or more of a particular associated priority class.

## Claims

1. A user equipment (UE) for wireless communication, comprising:
at least one memory; and
at least one processor coupled with the at least one memory and configured to cause the UE to:
perform a first transmission authorization procedure for a channel in an unlicensed carrier to determine that the channel is clear, wherein the first transmission authorization procedure is based at least in part on a number of sensing slots in a first contention window, and the first contention window is based at least in part on a maximum contention window size; and
perform a second transmission authorization procedure for the channel in the unlicensed carrier, wherein the second transmission authorization procedure is based at least in part on a determination that the maximum contention window size is updated, and a second contention window for the second transmission authorization procedure is based at least in part on the updated maximum contention window size.

2. The UE of claim 1, wherein the at least one processor is configured to cause the UE to perform a sidelink transmission using the channel in the unlicensed carrier.

3. The UE of claim 2, wherein the sidelink transmission is associated with a feedback type, and wherein based at least in part on the feedback type comprising a no hybrid automatic repeat request (HARQ) feedback, the maximum contention window size is updated after a configured number of transmission authorization procedures using a selected sequence value from an ordered sequence of values corresponding to the maximum contention window size.

4. The UE of claim 1, wherein the maximum contention window size is selected from an ordered sequence of values for a maximum contention window size for an associated priority class for use in determining a contention window size.

5. The UE of claim 4, wherein a number of transmission authorization procedures using a selected value from the ordered sequence of values is configurable.

6. The UE of claim 1, wherein after a number of transmission authorization procedures using a selected sequence value from an ordered sequence of values corresponding to the maximum contention window size, a next sequence value corresponding to a next higher value from the ordered sequence of values is selected as a maximum contention window size.

7. The UE of claim 6, wherein if there is no next higher value in the ordered sequence of values for use as the maximum contention window size, a next value corresponding to a lowest value in the ordered sequence of values is selected as a maximum contention window size.

8. A processor for wireless communication, comprising:
at least one controller coupled with at least one memory and configured to cause the processor to:
perform a first transmission authorization procedure for a channel in an unlicensed carrier to determine that the channel is clear, wherein the first transmission authorization procedure is based at least in part on a number of sensing slots in a first contention window, and the first contention window is based at least in part on a maximum contention window size; and
perform a second transmission authorization procedure for the channel in the unlicensed carrier, wherein the second transmission authorization procedure is based at least in part on a determination that the maximum contention window size is updated, and a second contention window for the second transmission authorization procedure is based at least in part on the updated maximum contention window size.

9. The processor of claim 8, wherein the at least one controller is configured to cause the processor to perform a sidelink transmission using the channel in the unlicensed carrier.

10. The processor of claim 9, wherein the sidelink transmission is associated with a feedback type, and wherein based at least in part on the feedback type comprising a no hybrid automatic repeat request (HARQ) feedback, the maximum contention window size is updated after a configured number of transmission authorization procedures using a selected sequence value from an ordered sequence of values corresponding to the maximum contention window size.

11. The processor of claim 8, wherein the maximum contention window size is selected from an ordered sequence of values for a maximum contention window size for an associated priority class for use in determining a contention window size.

12. The processor of claim 8, wherein after a number of transmission authorization procedures using a selected sequence value from an ordered sequence of values corresponding to the maximum contention window size, a next sequence value corresponding to a next higher value from the ordered sequence of values is selected as a maximum contention window size.

13. The processor of claim 12, wherein if there is no next higher value in the ordered sequence of values for use as the maximum contention window size, a next value corresponding to a lowest value in the ordered sequence of values is selected as a maximum contention window size.

14. A method performed by a user equipment (UE), the method comprising,
performing a first transmission authorization procedure for a channel in an unlicensed carrier to determine that the channel is clear, wherein the first transmission authorization procedure is based at least in part on a number of sensing slots in a first contention window, and the first contention window is based at least in part on a maximum contention window size; and
performing a second transmission authorization procedure for the channel in the unlicensed carrier, wherein the second transmission authorization procedure is based at least in part on a determination that the maximum contention window size is updated, and a second contention window for the second transmission authorization procedure is based at least in part on the updated maximum contention window size.

15. The method of claim 14, further comprising perform a sidelink transmission using the channel in the unlicensed carrier.
